# FASCICULE DE BREVET EUROPEEN

(11) **EP 2 167 409 B1**
(45) Date de publication et mention de la délivrance du brevet: **04.04.2012**
(21) Numéro de dépôt: 08806010.8
(22) Date de dépôt: 16.06.2008
(51) Int. Cl.: B65G 47/82

(54) **PROCEDE DE GROUPAGE DE FLACONS, BOUTEILLES OU AUTRES**
VERFAHREN ZUR GRUPPIERUNG VON PHIOLEN, FLASCHEN ODER ÄHNLICHEM
METHOD FOR GROUPING VIALS, BOTTLES OR SAME

(30) Priorité: 04.07.2007 FR 0704807
(43) Date de publication de la demande: 31.03.2010
(73) Titulaire: Sidel Participations, 76930 Octeville Sur Mer (FR)
(72) Inventeur: MOUGIN, Didier, 76930 Octeville-sur-Mer (FR); BEGIN, Michel, 76930 Octeville-sur-Mer (FR); DUCHEMIN, Guillaume, 76930 Octeville-sur-Mer (FR); POUPON, Christophe, 76930 Octeville-sur-Mer (FR)
(74) Mandataire: Bérogin, Francis
(86) Numéro de dépôt international: PCT/FR2008/051075
(87) Numéro de publication internationale: WO 2009/004241

(56) Documents cités:
- GB-A- 2 174 667

## Description

La présente invention concerne un procédé de groupage de produits en vue de leur encaissage, par exemple, elle concerne également l'installation qui permet sa mise en oeuvre.

Le groupage de produits du genre flacons, bouteilles ou autres, peut s'effectuer de plusieurs façons selon le type et la nature des produits et aussi selon les cadences souhaitées.

Une forme de groupage est décrite dans le document GB 2174667. Les produits arrivent en ligne sur un convoyeur d'amenée et ils sont pris en charge, à la volée, par un dispositif poussoir qui emporte un lot de bouteilles.

Ce dispositif poussoir se présente sous la forme d'une crémaillère qui est disposée longitudinalement, sur le côté de ladite ligne de bouteilles. Cette crémaillère est animée d'un mouvement combiné en boucle : à la fois un mouvement longitudinal dans le sens d'avancement des produits et un mouvement transversal, pour déposer le lot de produits en rang, sur le côté du convoyeur d'amenée où ils sont repris ensuite par d'autres moyens.

D'une manière générale, les produits arrivent au niveau du dispositif de prise en charge en étant bien répartis, de façon régulière, selon le pas des dents ou autres. La mise au pas des produits peut être effectuée au moyen d'un cadenceur.

Pour des produits de formes particulières, autres que des formes cylindriques, par exemple, l'orientation et la mise au pas précise des produits sont réalisées au moyen d'un cadenceur qui est constitué d'un couple de vis sans fin; ces vis sans fin interviennent en amont du dispositif de prise en charge d'un lot, entre la machine de préparation des produits, dont le débit est relativement aléatoire, et le dispositif en question qui va amener ledit lot à la tête de manipulation pour l'encaissage, par exemple.

Ce dispositif de prise en charge ne peut souffrir un quelconque désordre au niveau de la répartition des produits. Le lot de produits doit être parfaitement établi pour être pris en charge par le poussoir ou autre, avant d'être prélevé par la tête de manipulation qui réalise l'encaissage, par exemple.

Lorsque l'installation est du genre flexible, c'est-à-dire susceptible de traiter plusieurs types de produits, il faut prévoir un outillage pour chaque type de produits, aussi bien au niveau du dispositif de prise en charge que des vis du cadenceur.

Les dispositifs de prise en charge du type poussoirs, ou autres, sont généralement constitués d'une simple lame ou bande réalisée en matériau thermoplastique sur laquelle sont taillées des dents de calage ou des alvéoles : ils sont relativement simples à changer et peu coûteux.

En revanche, ce problème de changement est différent pour les vis du cadenceur qui sont des outillages très onéreux, relativement lourds et assez compliqués à changer.

Compte tenu du poids de ces vis, leur changement est aussi une opération qui peut nécessiter du matériel de manutention et leur stockage requiert des aménagements du genre magasins, relativement encombrants.

De plus, ce genre d'installation qui comprend, d'une part, un cadenceur et, d'autre part un dispositif de prise en charge du lot, est particulièrement encombrant en longueur, et peut, dans certains cas, être inadapté du fait des contraintes liées à l'implantation, notamment lorsque la place est insuffisante dans des locaux existants.

L'invention propose un procédé de groupage de produits qui permet de disposer d'une installation compacte, relativement simple et surtout dotée de grandes capacités en matière de polyvalence, de flexibilité.

Ce procédé et l'installation pour sa mise en oeuvre permettent aussi d'envisager l'utilisation d'un outillage d'une grande simplicité, facile à changer et surtout d'un coût extrêmement modeste, ce qui permet de réaliser des outillages bien adaptés à chaque type de produits.

De plus ce procédé permet de raccourcir la longueur du circuit suivi par les produits et donc de réduire les risques d'altération de ces derniers par frottements, notamment, sur des guides et autres.

L'installation se positionne directement en sortie de l'unité de préparation des produits, après la remplisseuse et/ou l'étiqueteuse, par exemple.

Elle peut aussi se présenter comme un véritable accessoire et n'être utilisée que pour des travaux spécifiques, pour certains types de produits ; le reste du temps elle peut être désactivée, shuntée.

Le procédé permet une grande souplesse d'utilisation ; les produits peuvent aussi être regroupées en un seul ou plusieurs lots selon les nécessités.

Le procédé de groupage selon l'invention permet de former un lot de produits en vue d'une prise en charge par des moyens appropriés, lesquels produits arrivent en ligne, sur une file, transportés par un convoyeur d'amenée, lequel procédé consiste :
- à capter un certain nombre de produits sur ledit convoyeur d'amenée, au moyen d'un dispositif de collecte en forme de peigne, appelé collecteur, qui est disposé transversalement par rapport au sens d'avancement desdits produits,
- à les déposer et à les larguer à un poste de prise en charge qui se situe sur le côté dudit convoyeur d'amenée,
- à animer ledit collecteur d'un mouvement en boucle qui se décompose en un mouvement transversal, parfois combiné avec un mouvement longitudinal de remontée de la file de produits, c'est-à-dire un mouvement inverse de celui dudit convoyeur d'amenée de ces produits,
- à déclencher la capture des produits en fonction d'informations qui prennent en compte : - la position desdits produits sur ledit convoyeur d'amenée par rapport audit collecteur et, - la vitesse dudit convoyeur d'amenée.

Toujours selon l'invention, le procédé de groupage de produits consiste : - à détecter l'arrivée d'un produit en amont du collecteur, - à l'attendre éventuellement et, à tout le moins, marquer un temps d'arrêt au moment où ledit produit détecté atteint sa position et se cale dans l'alvéole allouée dudit collecteur, puis - à amorcer la combinaison des mouvements transversal et longitudinal pour préparer la capture suivante.

Selon une autre disposition de l'invention, le procédé consiste à capter les produits les uns à la suite des autres en des points différents sur le convoyeur d'amenée, lesquels points sont décalés en remontant la ligne avec un même intervalle entre deux points consécutifs.

Toujours selon l'invention, le procédé consiste, lorsque le collecteur est complètement rempli, - à le décaler transversalement avec ses produits captés pour les amener au poste de dépose, dans une structure d'accueil en forme de peigne également, par exemple, puis - à déplacer ledit collecteur, parallèlement et transversalement au convoyeur d'amenée des produits pour, dans un premier temps, doubler la file des produits à capter et, ensuite, ramener ledit collecteur au niveau du premier point de capture.

Selon une autre disposition de l'invention, le procédé consiste à déposer les produits captés, par le collecteur, d'un seul et même côté du convoyeur d'amenée, en amont du dernier point de capture desdits produits.

Selon une variante de réalisation de l'invention, le procédé consiste à déposer les produits captés par le collecteur, alternativement d'un côté puis de l'autre côté du convoyeur d'amenée.

L'invention concerne également l'installation qui permet la mise en oeuvre du procédé détaillé auparavant, laquelle installation comprend :
- au moins une table faisant office de sole, disposée au niveau et à côté du convoyeur d'amenée des produits à capter, pour porter les produits captés,
- un dispositif de collecte, ou collecteur, en forme de peigne, disposé transversalement par rapport au sens d'avancement des produits, mobile au-dessus de ladite sole,
- une structure appropriée pour déplacer longitudinalement et transversalement ledit collecteur par rapport audit convoyeur d'amenée,
- des moyens pour détecter la présence d'un produit à capter sur ledit convoyeur d'amenée, lesquels moyens sont disposés en amont dudit collecteur et se déplacent longitudinalement, simultanément à ce dernier.

Toujours selon l'invention, la table d'accueil des produits captés s'étend de part et d'autres du convoyeur d'amenée pour permettre un largage des produits captés des deux côtés dudit convoyeur, en rive.

L'invention concerne aussi le collecteur utilisé et en particulier un collecteur dont la forme de chaque alvéole correspond strictement à celle du produit à capter de façon à éviter les frottements et à limiter, dans le cas de cadences élevées, les risques de rebond du produit sur ledit collecteur lorsque ledit produit se met en place dans son alvéole.

Toujours selon l'invention, l'installation peut comporter des moyens complémentaires qui apportent une aide au maintien des produits au niveau du poste de prise en charge, lesquels moyens sont constitués d'une autre structure, en forme de peigne fixe.

Selon une autre disposition de l'invention, l'installation peut encore comporter des moyens complémentaires pour assurer une certaine stabilisation des produits captés pendant l'opération de captation, lesquels moyens peuvent être, par exemple, constitués de ventouses disposées dans le fond des alvéoles et mises en oeuvre pendant ladite opération ou d'un guide qui est escamotable lorsque les produits sont emmenés vers le poste de prise en charge.

Mais l'invention sera encore détaillée à l'aide de la description suivante et des dessins annexés, donnés à titre indicatif, et dans lesquels :
- la figure 1 est une présentation schématique en perspective de l'installation selon l'invention, associée à un convoyeur d'amenée des produits ;
- la figure 2 est un chronogramme avec le temps T en abscisse et les vitesses aller VA et retour VR en ordonnée, lequel chronogramme illustre un cycle de captage des produits avec les courbes des vitesses de déplacement du collecteur: une courbe en traits forts pour la vitesse transversale VT et, une courbe en pointillés pour la vitesse longitudinale VL ;
- les figures 3 à 8 illustrent quelques étapes du procédé de captage des produits ;
- les figures 9 et 10 illustrent une variante de l'installation qui est équipée de deux zones de largage des produits captés.

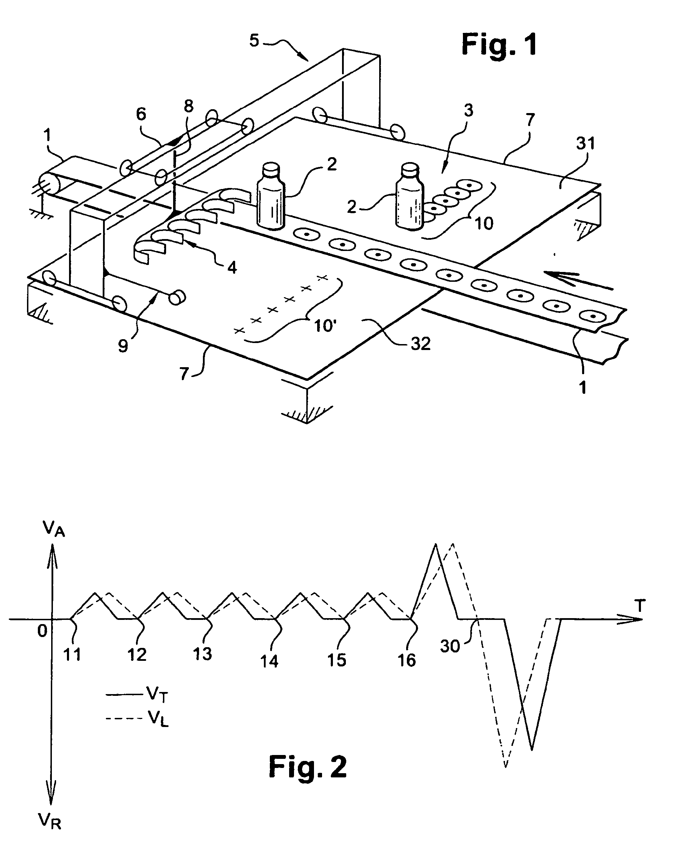

Telle que représentée figure 1, l'installation comprend un convoyeur (1) d'amenée des produits (2) qui proviennent, par exemple, d'un machine de préparation, non représentée, comme une remplisseuse et/ou étiqueteuse.

Les produits arrivent en ligne, sur une file ; ils passent le long d'une table (3) qui fait office de sole ; cette table (3) peut comporter un panneau qui s'étend le long du convoyeur (1), exactement au même niveau; elle peut aussi, comme représentée figure 1 et expliqué plus loin, être constituée de deux panneaux (31) et (32) qui s'étendent de part et d'autre du convoyeur (1), formant une continuité de surface ; chaque panneau (31), (32) étant au même niveau que la surface supérieure de ce convoyeur (1).

Le convoyeur (1) d'amenée est déchargé de ses produits (2) au moyen d'un dispositif de collecte appelé collecteur dans le texte, lequel collecteur (4), en forme de peigne, capte les produits (2) les uns après les autres au fur et mesure de l'avance dudit convoyeur (1) ; il est disposé transversalement par rapport au sens d'avancement desdits produits (2) et il se décale transversalement, après chaque capture, d'une distance qui est de l'ordre de la largeur desdits produits (2).

Pour pouvoir décharger les produits captés et recommencer un cycle, le collecteur (4), comme détaillé plus loin, est également mobile longitudinalement. Il remonte la file des produits dans le sens contraire de l'avancement du convoyeur (1) d'amenée pendant l'opération de captage et, ensuite, après dépose et largage des produits captés, ledit collecteur remonte de nouveau la file de produits, mais dans le sens d'avancement dudit convoyeur cette fois, et à grande vitesse, pour doubler ladite file et se repositionner rapidement devant le premier produit à capter.

Pour effectuer ces différents mouvements, le collecteur (4) est mobile, porté et guidé par une structure qui comprend - une sorte de portique (5) capable de se déplacer longitudinalement au-dessus de la table (3), dans le même sens que les produits (2) disposés sur le convoyeur (1), et, - un chariot (6) qui se déplace sur ledit portique (5), toujours au-dessus de ladite table (3), transversalement, lequel collecteur (4) est suspendu audit chariot (6).

Le portique (5) est guidé sur des rails (7) disposés sur la table (3) et en particulier sur les bordures latérales de chaque panneau (31), (32), et il est mobile sous l'effet d'un organe moteur, non représenté, du type servoréducteur ou moteur électrique linéaire.

Le chariot (6) est guidé sur des poutres disposées à la partie supérieure du portique (5) et il est également mobile, lui aussi, sous l'effet d'un organe moteur, non représenté, du type servoréducteur ou moteur électrique linéaire.

Le collecteur (4) est solidaire du chariot (6) par l'intermédiaire d'un support en forme de bras (8) ; il est maintenu à une hauteur appropriée par rapport aux produits (2) à capter.

La liaison entre le bras (8) et le collecteur (4) est aménagée pour faciliter les opérations de changement de modèles ; ce collecteur constitue en effet un outillage qui est adapté à la forme des produits (2) à capter.

Un système (9) de détection, installé sur le portique (5), permet de lancer le cycle de captage des produits (2). En effet, l'information concernant la détection du passage d'un produit permet, en fonction de la vitesse d'avancement du convoyeur (1) d'amenée, de déterminer au moyen d'un calculateur approprié, le moment de son intégration dans l'alvéole allouée du collecteur (4).

A partir de cette intégration, le collecteur (4) peut amorcer son mouvement de décalage et positionner l'alvéole adjacente libre sur l'axe de la file des produits disposés sur le convoyeur (1) d'amenée, pour que cette alvéole soit prête à accueillir le produit suivant.

Lorsque le nombre prévu de produits (2) à capter est atteint, lesdits produits captés sont acheminés et targuées au poste (10) de prise en charge qui se situe sur la table (3), dans sa partie amont.

Selon le type de produits, le bras (8) peut comporter plusieurs collecteurs superposés, deux par exemple, pour des produits dont la hauteur est telle qu'ils risquent, compte tenu de leur instabilité, de provoquer des incidents lors de leur prise en charge par un collecteur (4) unique.

Les produits (2) arrivent en file sur le convoyeur d'amenée. Ils sont de préférence espacés, soit naturellement en sortie de la machine de préparation, soit de façon forcée par des moyens appropriés, non représentés.

La figure 2 représente, sous la forme d'un chronogramme, les vitesses aller VA et retour VR de déplacement transversal du collecteur (4), en fonction du temps T.

Le chronogramme représente un cycle complet de capture de six produits (2) avec dépose au poste (10) de prise en charge et retour au niveau du premier point de capture.

Ces différents points de capture apparaissent sur le chronogramme de la figure 2 ainsi que sur les figures suivantes.

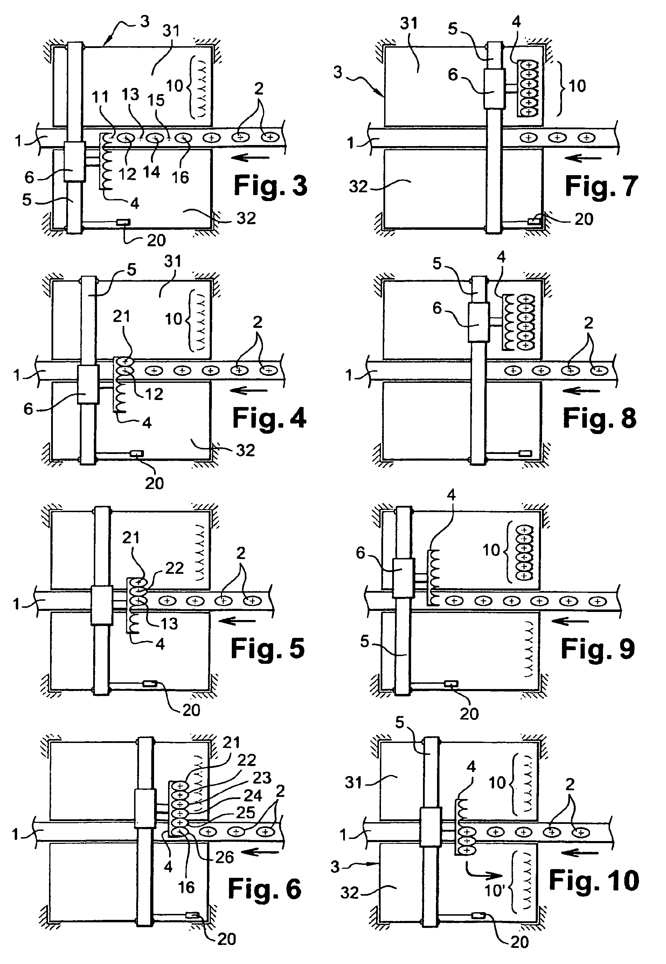

Le premier point repéré (11) sur le chronogramme correspond au moment où, comme représenté figure 3, le collecteur (4) accueille le premier produit (2, 21) qui arrive avec le convoyeur (1).

Avant ce point (11), le collecteur (4) est en position d'attente, immobile, se tenant prêt à accueillir le premier produit (2, 21).

Ce premier produit (21) est détecté par le système (9) approprié constitué d'une cellule (20) qui apparaît sur cette figure 3 et sur les figures suivantes. Cette cellule (20) est embarquée longitudinalement avec le collecteur (4) ; elle le précède.

Dès que le premier produit (21) est positionné dans son alvéole du collecteur (4), et grâce à l'information donnée par la cellule (20), ledit collecteur (4) se déplace, comme indiqué sur le chronogramme, avec un mouvement particulier qui comporte tout d'abord une combinaison de mouvements qui comprend une composante transversale et une composante longitudinale, puis, le mouvement transversal s'arrête alors que le mouvement longitudinal continue et ceci jusqu'au moment de l'impact.

La durée du mouvement transversal est donc légèrement plus courte que celle du mouvement longitudinal.

Cette combinaison des mouvements n'est pas permanente; elle n'est que temporaire et elle permet de laisser du temps au collecteur (4) pour se stabiliser dans le sens transversal, avant la capture du produit (2) qui se présente à lui.

Le mouvement transversal du collecteur (4) est stoppé dès que la deuxième alvéole se cale sur l'axe de la ligne des produits (2) et ledit collecteur (4) attend l'impact du deuxième produit (22) à capter. Ce nouvel impact a lieu à un second point (12) qui est fixe également, lequel second point (12), figure 4, se situe en amont du premier point (11) de captage.

La distance entre les deux points de captage est fonction de plusieurs paramètres comme, par exemple, les capacités d'accélération maxi et de vitesse maxi du collecteur (4) combinées avec les particularités des produits en matière de stabilité, de formes et de dimensions.

Dans le mode de réalisation représenté sur les figures, cette distance est de l'ordre de la moitié du pas qui existe entre deux produits (2) consécutifs disposés sur le convoyeur (1).

Au moment de l'impact du produit (2, 21) avec le collecteur (4), la vitesse du produit capté correspond à la vitesse du convoyeur (1) d'amenée et, à cet instant précis, ledit collecteur (4) est immobile.

Le captage des autres produits (23 à 26) s'effectue donc pas à pas, comme précédemment avec, à chaque fois un nouveau point fixe de captage qui est distant du point précédent.

Comme représenté figure 5 ainsi que sur le chronogramme de la figure 2, le point de captage suivant est le point (13) puis ensuite les points (14, 15) représentés également sur ledit chronogramme et, enfin, le point (16), figure 6, où le collecteur (4) accueille le dernier produit (26) du lot.

Le collecteur (4) se déporte ensuite rapidement et totalement sur le côté du convoyeur (1), comme représenté figure 7 et sur le chronogramme, pour déposer et larguer son lot de produits au poste (10) de prise en charge; laquelle dépose est repérée (30) sur ledit chronogramme.

Ce poste (10) de prise en charge peut comporter, comme représentée sur les figures, une structure en forme de peigne fixe, pour accueillir le lot de produits (21 à 26), pour les stabiliser et les maintenir le temps qu'ils soient pris en charge par une tête de manipulation, par exemple, non représentée, ou autre.

Dès que le lot de produits (21 à 26) est au poste (10) de prise en charge, sur ie panneau (31) de la table (3), le collecteur (4) est animé d'un mouvement de recul, figure 8 ; ce mouvement s'effectue parallèlement à la file des produits (2) disposés sur le convoyeur (1) d'amenée, à une vitesse plus importante que celle dudit convoyeur (1), pour doubler ladite file et permettre au collecteur (4) de se repositionner par un mouvement de translation, au premier point (11) de captage, comme représenté figure 3, avant de recommencer un cycle de captage.

Ce mouvement cyclique, en boucle, a une durée qui est déterminés par la vitesse de défilement des produits (2) qui sont amenés par le convoyeur (1), mais surtout par le temps mis par chaque produit pour atteindre son point de captage et ce temps peut varier selon l'espacement entre lesdits produits.

Dès que l'opération de capture proprement dite est terminée, la cellule (20) est mise en stand-by; elle est notamment inactive pendant le mouvement de recul du collecteur (4)

La figure 9 représente une variante de réalisation de l'installation.

Cette installation comporte une table (3), comme indiqué précédemment, qui présente une symétrie totale par rapport au convoyeur (1) d'amenée. Cette symétrie permet de disposer de deux postes (10) et (10') de prise en charge sur la table (3):
- le poste (10) situé sur le panneau (31), en rive droite dudit convoyeur (1) et
- le poste (10') situé sur le panneau (32), en rive gauche dudit convoyeur (1).

Chaque lot de produits (2) captés est déposé et largué alternativement sur les côtés du convoyeur (1), en rive, par le même collecteur (4).

Cette disposition confère un mouvement au collecteur (4) dont l'enveloppe est une boucle qui a un contour en forme d'ailes de papillon déployées. Ce mouvement du collecteur (4) avec des allers et venues entre les deux postes (10, 10'), permet de limiter les temps morts.

La figure 9 montre le collecteur (4) en position d'attente au premier point (11) de captage, après son retour du poste (10) de dépose. La capture s'effectue, comme décrit précédemment, mais le collecteur (4) progressé vers le second poste (10') de prise en charge.

Pendant ce cycle de capture et de dépose sur la rive gauche du convoyeur (1), le lot de produits déposés au poste (10) de la rive droite dudit convoyeur a été évacué, libérant la place pour l'arrivée d'un nouveau lot de produits (2).

Le collecteur (4) peut aussi comporter des alvéoles susceptibles d'accueillir plusieurs produits (2).

Pendant le chargement du collecteur (4), des moyens appropriés peuvent retenir les produits captés dans les alvéoles. Ces moyens sont embarqués longitudinalement avec le collecteur (4). Ils peuvent être constitués de ventouses disposées dans le fond des alvéoles du collecteur (4) et qui sont mises en oeuvre pendant l'opération de captage ou de moyens du genre guide, lequel guide étant escamotable lorsque le collecteur se présente au poste (10), ou (10'), de prise en charge.

## Revendications

1. Procédé de groupage de produits pour former un lot en vue d'une prise en charge par des moyens appropriés, lesquels produits arrivent en liane, sur une ligne, transportés par un convoyeur (1) d'amenée, lequel procédé consiste :
- à capter un certain nombre de produits (2) sur ledit convoyeur d'amenée, au moyen d'un dispositif collecteur (4) en forme de peigne qui est disposé transversalement par rapport au sens d'avancement desdits produits (2).
- à les déposer et les larguer à un poste (10) de prise en charge qui se situe sur le côté dudit convoyeur (1) d'amenée,
- à animer ledit collecteur (4) d'un mouvement en boucle qui se décompose en un mouvement transversal parfois combiné avec un mouvement longitudinal de remontée de la file, c'est-à-dire un mouvement inverse de celui dudit convoyeur (1) d'amenée des produits.
- à déclencher le cycle de capture desdits produits (2) en fonction d'informations qui prennent en compte - la position desdits produits (2) sur ledit convoyeur (1) d'amenée par rapport audit collecteur (4) et - la vitesse dudit convoyeur (1).

2. Procédé de groupage de produits selon la revendication 1, **caractérisé en ce qu'**il consiste, pour le collecteur (4), après avoir détecté l'arrivée d'un produit (2) à capter : - à marquer un temps d'arrêt au moment où ledit premier produit (2, 21) atteint sa position et se cale dans l'alvéole allouée dudit collecteur (4), puis - à amorcer la combinaison des mouvements transversal et longitudinal pour préparer la capture suivante, - à stopper le mouvement transversal dudit collecteur (4) et son mouvement longitudinal au moment de l'impact.

3. Procédé de groupage de produits selon la revendication 2, **caractérisé en ce qu'**il consiste à capter les produits (2) les uns à la suite des autres en des points (11 à 16) différents sur le convoyeur (1) d'amenée, lesquels points sont décalés en remontant la ligne de produits avec un même intervalle entre deux points consécutifs.

4. Procédé de groupage de produits selon la revendication 3, **caractérisé en ce qu'**il consiste, lorsque le collecteur (4) est complètement rempli, - à décaler transversalement ledit collecteur (4) avec ses produits (21 à 26) captés pour amener ces derniers au poste (10) de dépose, dans une structure d'accueil en forme de peigne également, puis - à déplacer ledit collecteur (4), parallèlement au convoyeur (1) d'amenée des produits (2), dans un premier temps pour doubler la file et le premier produit à capter et, ensuite, dans un deuxième temps, longitudinalement et transversalement pour ramener ledit collecteur (4) au niveau du premier point (11) de capture.

5. Procédé de groupage de produits selon la revendication 4, **caractérisé en ce qu'**il consiste à déposer les produits (21 à 26) captés par le collecteur (4), d'un seul et même côté du convoyeur (1) d'amenée, en amont du niveau du dernier point (16) de capture desdits produits (2).

6. Procédé de groupage de produits selon la revendication 5, **caractérisé en ce qu'**il consiste à déposer les produits (21 à 26) captés par le collecteur (4), alternativement sur la rive droite et sur la rive gauche du convoyeur (1) d'amenée.

7. Installation pour la mise en oeuvre du procédé selon l'une quelconque des revendications 1 à 6, **caractérisée en ce qu'**elle comprend :
- au moins une table (3) faisant office de sole, disposée au niveau et à côté du convoyeur (1) d'amenée des produits (2) à capter, pour porter lesdits produits captés,
- un collecteur (4) en forme de peigne, disposé transversalement par rapport au sens d'avancement des produits (2), mobile au-dessus de ladite table (3),
- une structure appropriée pour porter et déplacer longitudinalement et transversalement ledit collecteur (4) par rapport et au-dessus dudit convoyeur (1) d'amenée et de la table (3),
- des moyens pour détecter la présence d'un produit (2) à capter sur ledit convoyeur (1) d'amenée, lesquels moyens sont disposés en amont dudit collecteur (4) et ils se déplacent longitudinalement avec ce dernier.

8. Installation selon la revendication 7, **caractérisée en ce que** la table (3) d'accueil des produits (21 à 26) captés est constituée de deux panneaux (31, 32) qui s'étendent de part et d'autre du convoyeur (1) d'menée pour permettre un largage desdits produits (21 à 26) captés des deux côtés dudit convoyeur (1), en rive.

9. Installation selon l'une quelconque des revendications 7 ou 8, **caractérisée en ce que** le collecteur (4) comporte des alvéoles dont la forme correspond strictement à celle des produits (2) à capter de façon à limiter, dans le cas de cadences élevées, les risques de rebond du produit capté sur ledit collecteur (4) lorsque ledit produit se met en place dans son alvéole.

10. Installation selon l'une quelconque des revendications 7 à 9, **caractérisée en ce qu'**elle comporte des moyens complémentaires qui apportent une aide au maintien des produits (2) au niveau du poste (10, 10') de prise en charge, lesquels moyens sont constitués d'un peigne fixe.

11. Installation selon l'une quelconque des revendications 7 à 10, **caractérisée en ce qu'**elle comporte des moyens complémentaires pour retenir les produits captés dans les alvéoles du collecteur (4), lesquels moyens sont embarqués longitudinalement avec ledit collecteur (4) et sont mis en oeuvre pendant l'opération de captage desdits produits.

## Claims

1. Method for grouping products so as to form a batch in order to be taken up by suitable means, wherein said products arrive in a line, transported by a supply conveyor (1); the method consists of:
- collecting a certain number of products (2) on said supply conveyor, by means of a collector device (4), in the form of a comb, which is arranged transversally with respect to the forward direction of said products (2),
- depositing them and releasing them at a take-up station (10) that is located on the side of said supply conveyor (1),
- driving said collector (4) in a loop movement, which involves a transverse movement, sometimes combined with a longitudinal movement upstream along the product line, i.e. a movement opposite that of said product supply conveyor (1),
- activating the collection of products (2) according to information taking into account: - the position of said products (2) on said supply conveyor (1) with respect to said collector (4), and, - the speed of said supply conveyor (1).

2. Method for grouping products according to claim 1, **characterized in that** it consists, for the collector (4), after having detected the arrival of a product (2) to be collected, of: - marking a stopping time at the moment that said first product (2, 21) reaches its position and is wedged in the allocated cell of said collector (4), then - activating the combination of transverse and longitudinal movements in order to prepare for the next collection, - stopping the transverse movement of said collector (4) and its longitudinal movement at the moment of impact.

3. Method for grouping products according to claim 2, **characterized in that** it consists of collecting the products (2) one after another at various points (11 to 16) on the supply conveyor (1), wherein said points are offset upstream along the line with the same interval between two consecutive points.

4. Method for grouping products according to claim 3, **characterized in that** it consists, when the collector (4) is completely filled, of - transversally offsetting said collector (4) with its collected products (21 to 26) in order to bring the latter to the deposition station (10), in a receiving structure also of the comb type, then - moving said collector (4), parallel to the product (2) supply conveyor (1) in order, first, to overtake the line of products and the first product to be collected and, then, longitudinally and transversally to return said collector (4) to the level of the first capture point (11).

5. Method for grouping products according to claim 4, **characterized in that** it consists of depositing the products (21 to 26) collected by the collector (4) on a single side of the supply conveyor (1), upstream of the last collection point (16) of said products (2).

6. Method for grouping products according to claim 5, **characterized in that** it consists of depositing the products (21 to 26) collected by the collector (4), alternately on the right-hand edge and then on the left-hand edge of the supply conveyor (1).

7. Installation for implementing the method according to any one of claims 1 to 6, **characterized in that** it includes:
- at least one table (3) acting as a bed, arranged at the level and to the side of the conveyor (1) for supplying the products (2) to be collected, in order to hold said collected products,
- a collector (4), in the form of a comb, arranged transversally with respect to the forward direction of the products (2), capable of moving above said bed (3),
- a suitable structure for carrying and moving said collector (4) longitudinally and transversally with respect to and above said supply conveyor (1) and the table (3),
- means for detecting the presence of a product (2) to be collected on said supply conveyor (1), which means are arranged upstream of said collector (4) and move longitudinally with the latter.

8. Installation according to claim 7, **characterized in that** the table (3) for receiving the collected products (21 to 26) consists of two panels (31, 32), which extend on either side of the supply conveyor (1) in order to enable the collected products (21, to 26) to be released on both sides of said conveyor (1), at the edge.

9. Installation according to either one of claims 7 or 8, **characterized in that** the collector (4) comprises cells of which the shape corresponds strictly to that of the products (2) to be collected so as to limit, in the case of high speeds, the risk of the product bouncing on said collector (4) when said product is placed in its cell.

10. Installation according to any one of claims 7 to 9, **characterized in that** it comprises additional means that help to hold the products (2) at the level of the take-up station (10, 10'), wherein said means consist of a stationary comb.

11. Installation according to any one of claims 7 to 10, **characterized in that** it comprises additional means for holding the collected products in the cells of the collector (4), wherein said means are longitudinally borne by said collector (4) and are implemented during the operation of collecting said products.

## Patentansprüche

1. Verfahren zum Gruppieren von Waren zur Bildung eines Postens für die Übernahme durch entsprechende Mittel, wobei die Waren in einer Reihe auf einem Band, durch ein Fördermittel (1) transportiert, ankommen, wobei das Verfahren darin besteht:
- eine gewisse Anzahl von Waren (2) auf dem Fördermittel mit Hilfe einer Sammelvorrichtung (4) in Form eines Kamms, der quer zur Vorschubrichtung der Waren (2) angeordnet ist, zu erfassen,
- sie an einer Übernahmestation (10), die sich auf der Seite des Fördermittels (1) befindet, abzulegen und abzuwerfen,
- die Sammelvorrichtung (4) eine schleifenartige Bewegung ausführen zu lassen, die sich aus einer Querbewegung, manchmal kombiniert mit einer Längsbewegung zum Anheben der Reihe, zusammensetzt, d.h. einer zu jener des Fördermittels (1) der Waren umgekehrten Bewegung,
- den Zyklus zum Erfassen der Waren (2) in Abhängigkeit von Informationen auszulösen, die - die Position der Waren (2) auf dem Fördermittel (1) in Bezug zur Sammelvorrichtung (4) und - die Geschwindigkeit des Fördermittels (1) berücksichtigen.

2. Verfahren zum Gruppieren von Waren nach Anspruch 1, **dadurch gekennzeichnet, dass** es für die Sammelvorrichtung (4), nachdem sie die Ankunft einer zu ergreifenden Ware (2) erfasst hat, darin besteht: - eine Anhaltezeit zu dem Zeitpunkt anzuzeigen, zu dem die Ware (2, 21) ihre Position erreicht und sich in der zugewiesenen Zelle der Sammelvorrichtung (4) anordnet, dann - die Kombination der Quer- und Längsbewegungen einzuleiten, um das nachfolgende Erfassen vorzubereiten, - die Querbewegung der Sammelvorrichtung (4) und ihre Längsbewegung zum Zeitpunkt des Auftreffens zu stoppen.

3. Verfahren zum Gruppieren von Waren nach Anspruch 2, **dadurch gekennzeichnet, dass** es darin besteht, die Waren (2) nacheinander an unterschiedlichen Punkten (11 bis 16) auf dem Fördermittel (1) zu erfassen, wobei die Punkte auf der Warenreihe aufsteigend mit einem selben Abstand zwischen zwei aufeinander folgenden Punkten versetzt sind.

4. Verfahren zum Gruppieren von Waren nach Anspruch 3, **dadurch gekennzeichnet, dass** es, wenn die Sammelvorrichtung (4) vollständig gefüllt ist, darin besteht, - die Sammelvorrichtung (4) mit ihren erfassten Waren (21 bis 26) zur Seite zu schieben, um diese letztgenannten zur Ablagestation (10) in einer Aufnahmestruktur ebenfalls in Form eines Kamms zu bringen, dann - die Sammelvorrichtung (4) parallel zum Fördermittel (1) der Waren (2) zu verschieben, zuerst um die Reihe und das erste zu erfassende Produkt zu verdoppeln, dann in einem zweiten Schritt längs und quer, um die Sammelvorrichtung (4) wieder zum ersten Erfassungspunkt (11) zurückzubringen.

5. Verfahren zum Gruppieren von Waren nach Anspruch 4, **dadurch gekennzeichnet, dass** es darin besteht, die Waren (21 bis 26), die von der Sammelvorrichtung (4) erfasst wurden, auf ein und derselben Seite des Fördermittels (1) im Vorlaufbereich des letzten Erfassungspunktes (16) der Waren (2) abzulegen.

6. Verfahren zum Gruppieren von Waren nach Anspruch 5, **dadurch gekennzeichnet, dass** es darin besteht, die Waren (21 bis 26), die von der Sammelvorrichtung (4) erfasst wurden, alternativ am rechten und am linken Rand des Fördermittels (1) abzulegen.

7. Anlage für den Einsatz des Verfahrens nach einem der Ansprüche 1 bis 6, **dadurch gekennzeichnet, dass** sie folgendes umfasst:
- mindestens einen Tisch (3), der als Unterlage dient, der auf Höhe und auf der Seite des Fördermittels (1) der zu erfassenden Waren (2) angeordnet ist, um die erfassten Waren zu tragen,
- eine Sammelvorrichtung (4) in Form eines Kamms, die quer in Bezug zur Vorschubrichtung der Waren (2) angeordnet und über dem Tisch (3) beweglich ist,
- eine geeignete Struktur, um die Sammelvorrichtung (4) in Bezug zu und über dem Fördermittel (1) und dem Tisch (3) längs und quer zu verschieben,
- Mittel, um das Vorhandensein einer zu erfassenden Ware (2) auf dem Fördermittel (1) festzustellen, wobei die Mittel im Vorlaufbereich der Sammelvorrichtung (4) angeordnet sind und sich längs mit dieser letztgenannten verschieben.

8. Anlage nach Anspruch 7, **dadurch gekennzeichnet**, das der Aufnahmetisch (3) der erfassten Waren (21 bis 26) von zwei Platten (31, 32) gebildet ist, die sich beiderseits des Fördermittels (1) erstrecken, um ein Abwerfen der erfassten Waren (21 bis 26) auf beiden Seiten des Fördermittels (1) am Rand zu ermöglichen.

9. Anlage nach einem der Ansprüche 7 oder 8, **dadurch gekennzeichnet, dass** die Sammelvorrichtung (4) Zellen umfasst, deren Form genau jener der zu erfassenden Waren (2) entspricht, um im Falle von hohen Arbeitstakten die Gefahren eines Zurückspringens der erfassten Waren auf die Sammelvorrichtung (4) zu begrenzen, wenn sich die Ware in ihrer Zelle anordnet.

10. Anlage nach einem der Ansprüche 7 bis 9, **dadurch gekennzeichnet, dass** sie ergänzende Mittel umfasst, die eine Unterstützung beim Halten der Waren (2) im Bereich der Übernahmestation (10, 10') geben, wobei diese Mittel von einem festen Kamm gebildet sind.

11. Anlage nach einem der Ansprüche 7 bis 10, **dadurch gekennzeichnet, dass** sie ergänzende Mittel umfasst, um die in den Zellen der Sammelvorrichtung (4) erfassten Waren zu halten, wobei die Mittel längs mit der Sammelvorrichtung (4) angeordnet sind und während des Vorgangs des Erfassens der Waren eingesetzt werden.
